# EUROPEAN PATENT APPLICATION

(11) **EP 1 800 778 A1**
(43) Date of publication of application: **27.06.2007**
(21) Application number: 05785958.9
(22) Date of filing: 20.09.2005
(51) Int. Cl.: B23B 5/16, B23B 13/08

(54) **END FACE WORKING DEVICE AND TUBE MANUFACTURING METHOD**

(30) Priority: 24.09.2004 JP 2004277368
(71) Applicant: SUMITOMO METAL INDUSTRIES, LTD., Osaka-shi, Osaka 541-0041 (JP)
(72) Inventor: ISHII, Kazuhiro, SUMITOMO METAL INDUSTRIES, LTD., Osaka-shi, Osaka 5410041 (JP); UE, Takafumi, MITAKE SEISAKUSHO CO. LTD, Wakayama-shi, Wakayama 6408411 (JP)
(74) Representative: Jackson, Martin Peter
(86) International application number: PCT/JP2005/017248
(87) International publication number: WO 2006/033314

(57) **Abstract**

An end portion machining apparatus capable of achieving an increase in both productivity and accuracy. The apparatus comprises a rotatable chuck which holds the vicinity of one end of a tubular good LP, a thread cutting machine 12 which is installed in the vicinity of the chuck and which has a machining tool which can be adjusted in position with respect to one end portion of the tubular good LP rotating with the chuck, and a support device 13 which supports the other end portion of the rotating tubular good LP while following the tubular good LP. The support device 13 comprises four support rollers 13a, 13b, 13c, and 13d which form pairs installed on both sides of the tubular good LP, each pair comprising an upper and lower roller, and air cylinders 13e and 13f which can individually move the pairs of support rollers 13a, 13b and 13c, 13d each comprising an upper and lower roller into and out of contact with the tubular good LP.

A tubular good can be supported with an optimal force, and even when a high machining speed is employed in order to increase productivity, vibrations of the tubular good are not transmitted to the portion which is undergoing machining, and both productivity and machining accuracy can be increased.

## Description

### Technical Field

This invention relates to an end portion machining apparatus for forming threads on an end portion of an elongated member such as a tubular good and to a method of manufacturing a tubular good utilizing this apparatus. In particular, this invention relates to an end portion machining apparatus for forming a threaded joint on an end portion of an oil country tubular good and to a method of manufacturing an oil country tubular good utilizing this end portion machining apparatus.

### Background Art

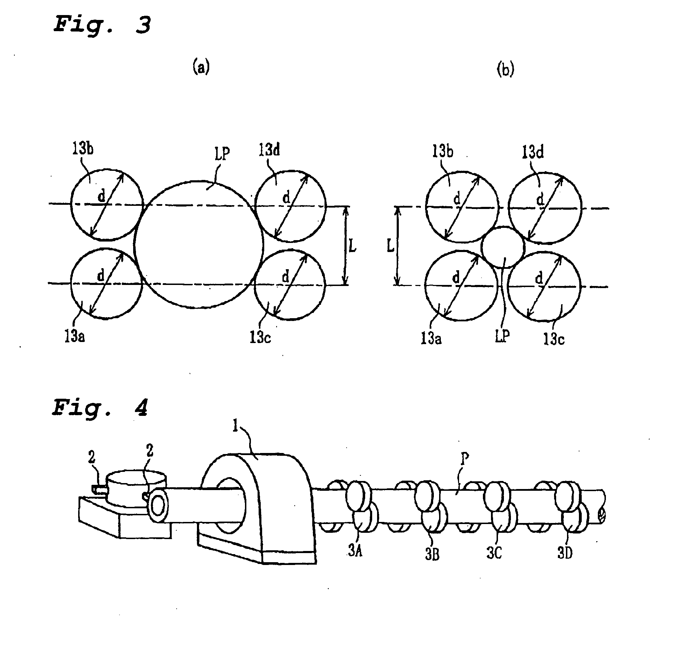

Thread cutting on an end portion of a tubular good, for example, is carried out, as shown in Figure 4 which is an explanatory view showing the way of thread cutting, by rotating a tubular good P which is secured by a chuck 1 in the vicinity of an end portion of the tubular good, which is to undergo thread cutting, by the rotation of the chuck 1 while contacting the end portion with a cutting tool 2 which is disposed so that its position relative to the tubular good P can be controlled.

A tubular good such as an oil country tubular good (oil well tubing or casing) is long, with a length of approximately 10 meters. There also exists an oil country tubular good referred to as tubing having an outer diameter of at most 114 mm. Thread cutting to form a threaded joint on an end portion of such an oil country tubular good is carried out by cutting the tubular good while rotating it at a high speed. Such a long and slender tubular good has a small amount of bending in the lengthwise direction thereof, which causes vibrations when it is rotated at a high speed during thread cutting.

These vibrations worsen the accuracy of thread cutting. Therefore, as shown in Figure 4, the occurrence of vibrations is suppressed by forcefully restraining the portion of the tubular good to the rear of the chuck 1 by groups of support rollers 3A - 3D.

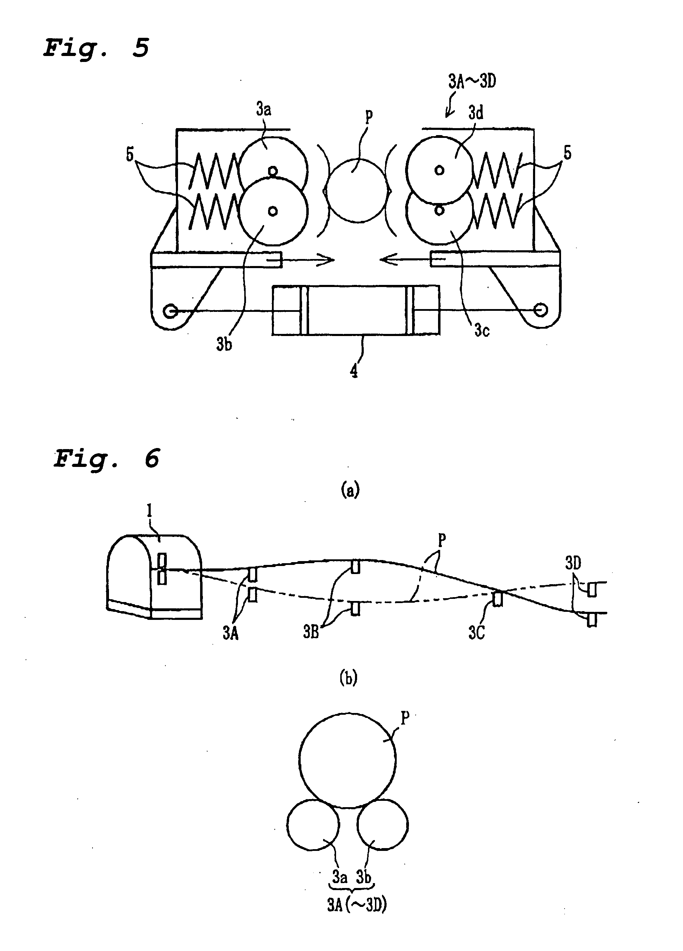

An example of the structure of such a support roller group is shown in Figure 5. The support roller group shown in Figure 5 consists of four support rollers 3a - 3d disposed on the left and right sides on a transverse section including the axis perpendicular to the longitudinal axis of the tubular good P (referred to below as "both sides of the member being machined") such that they are installed in groups of two rollers which are spaced in the axial direction of the tubular good P and which overlap each other in the vertical direction.

The tubular good P is restrained by moving the four support rollers 3a - 3d into and out of contact with the tubular good P by moving the two rollers 3a, 3b and 3c, 3d on the left and right sides synchronously by a cylinder apparatus 4, for example. In Figure 5, the four support rollers 3a - 3d are pressed against the tubular good P through springs 5 so that each support roller 3a - 3d can follow ellipticality or flatness of the tubular good P.

The support roller groups 3A - 3D shown in Figure 5 each move the two support rollers 3a, 3b and 3c, 3d on the left and right sides in synchrony into and out of contact with the tubular good P. Therefore, in some cases, depending upon the amount of bending of the tubular good P, the tubular good P cannot be restrained unless it is gripped fairly strongly. In spite of the presence of the springs 5, this strong gripping force can reinforce vibrations of the tubular good P due to ellipticality or flatness. As a result, it was not possible to sufficiently restrain vibrations caused by bending of the tubular good during rotation.

As shown in Figure 6, Patent Document 1 discloses an invention in which support roller groups 3A - 3D each support a tubular good P from below by pairs of support rollers 3a, 3b installed at suitable intervals. In these support roller groups, the support base for support roller group 3C which provides support at the location of smallest rotational vibration caused by bending of the tubular good P is fixed in place, and the support bases for the other support roller groups 3A, 3B, and 3D are movable so as to be able to follow the vibrations of the tubular good P utilizing hydraulic pressure.
Patent Document 1: JP H06-182603 A1

### Disclosure of Invention

### Problem Which the Invention is to Solve

In the invention disclosed by Patent Document 1, since the support bases for the support roller groups are allowed to follow the vibrations of a tubular good by hydraulic pressure, the responsiveness of following the vibrations is poor. In addition, the support roller groups, which each support a tubular good from below by a pair of support rollers, have a poor ability to provide support. Accordingly, when a high cutting speed is used in order to increase machining efficiency, the support roller groups cannot follow the vibrations of the tubular good, and it was not possible to achieve improvements in productivity and accuracy of machining.

Thus, a conventional end portion machining apparatus could not achieve both productivity and machining accuracy to a high level when forming a threaded joint for an oil country tubular good having a metal-to-metal seal portion, which requires strict machining accuracy.

### Means for Solving the Problem

The present invention is an end portion machining apparatus comprising a rotatable chuck which holds the vicinity of one end portion of a member being machined, a machining tool installed in the vicinity of the chuck for carrying out prescribed machining on one end portion of a member being machined which rotates together with the chuck, the position of the tool can be controlled with respect to one end portion of the member being machined, and a support device which supports the other end portion of the rotating member being machined while following the member being machined, characterized in that the support device has four support rollers which form pairs each comprising an upper and lower roller installed on both sides of the member being machined, and an air cylinder which can individually move each pair of support rollers comprising an upper and lower roller into and out of contact with the member being machined. This end portion machining apparatus can achieve both productivity and machining accuracy to a high level when machining a threaded joint for an oil country tubular good having a metal-to-metal seal portion requiring strict machining accuracy.

The present invention is also a method of manufacturing a tubular good characterized by including a step of machining an end portion of a tubular good utilizing this end portion machining apparatus.

### Effects of the Invention

In the present invention, pairs of support rollers each comprising an upper and lower roller installed on both sides of a member being machined can be individually moved into and out of contact with the member being machined by air cylinders. Therefore, they can support the member being machined with an optimal force, and even during rotation at a high speed, they can follow vibrations of a member being machined. As a result, even when a high rotational speed is employed in order to increase productivity, vibrations of the member being machined are not transmitted to the portion which undergoes machining, and good machining accuracy can be maintained. Therefore, productivity and machining accuracy can both be achieved to a high level.

Accordingly, even when a long tubular good is rotated at a high rotational speed, it is possible to carry out machining which can satisfy the strictly prescribed roughness and other parameters necessary for securing the air tightness of a metal-to-metal seal portion of a threaded joint on an oil country tubular good.

### Brief Description of the Drawings

Figure 1 is a schematic view showing the entirety of an end portion machining apparatus according to the present invention.
Figure 2 provides explanatory views of a support device constituting an end portion machining apparatus according to the present invention, Figure 2(a) being a front view and Figure 2(b) being a plan view.
Figure 3 provides explanatory views showing the positional relationship between a tubular good and support rollers, Figure 3 (a) showing the case in which a tubular good has a maximum diameter and Figure 3(b) showing the case in which a tubular good has a minimum diameter.
Figure 4 is an explanatory view showing a conventional end portion machining apparatus.
Figure 5 is an explanatory view showing an example of a support roller group used in a conventional end portion machining apparatus.
Figure 6 provides explanatory views showing the invention disclosed in Patent Document 1, Figure 6(a) being an overall view and Figure 6(b) being a schematic view of a support roller group.

### List of Referential Numerals

- LP:: tubular good
- 11:: end portion machining apparatus
- 12:: chuck
- 13:: support device
- 13a, 13b, 13c, 13d:: support rollers
- 13e, 13f:: air cylinders

### Best Mode for Carrying Out the Invention

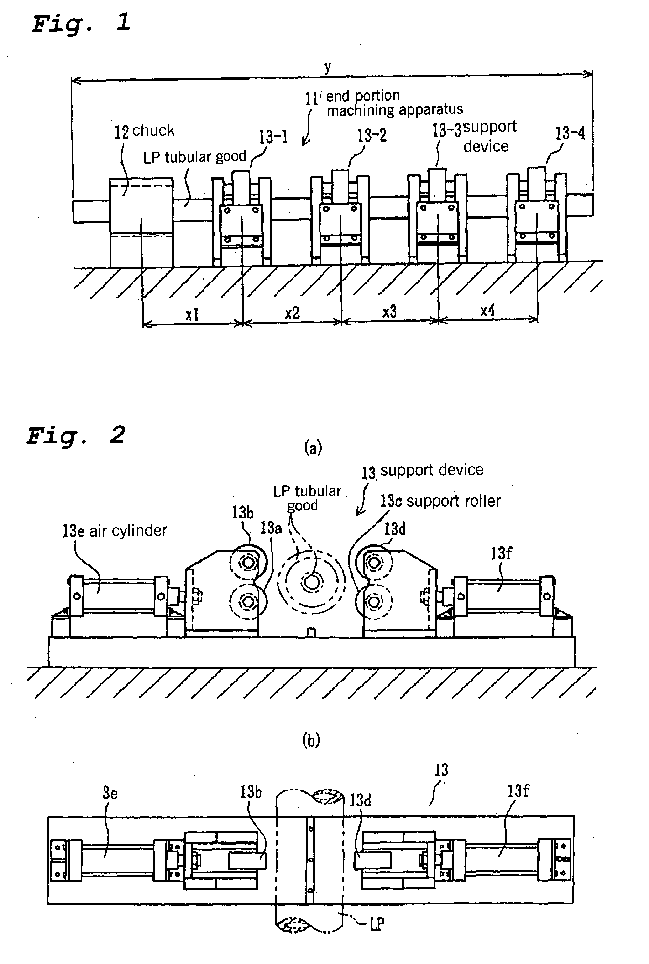

Below, the best mode of an end portion machining apparatus according to the present invention and of carrying out a method of manufacturing a tubular good utilizing the apparatus will be explained while referring to Figures 1-3.
Figure 1 is a schematic view showing the entirety of an end portion machining apparatus 11 according to the present invention. Figure 2 illustrates a support device constituting the end portion machining apparatus 11, Figure 2(a) being a front view and Figure 2(b) being a plan view. Figure 3 provides explanatory views showing the positional relationship between a tubular good and support rollers, Figure 3(a) showing the case of a large-diameter tubular good and Figure 3(b) showing the case of a small-diameter tubular good.

In this embodiment, a tubular good LP which undergoes machining of an end portion thereof by the end portion machining apparatus 11 is manufactured by a usual manufacturing process, i.e., including an elongation rolling step and a sizing rolling step. The end portion machining apparatus 11 comprises a chuck 12 disposed in a thread cutting machine for cutting a prescribed thread on one end portion of the tubular good LP, and four sets of support devices 13-1 through 13-4 which are arranged in series with the chuck 12 and support at least the other end portion of the tubular good LP. Usually one to twenty support devices 13 are disposed in the lengthwise direction of a tubular good LP.

If the spacing between the support rollers installed in the support device 13-1 positioned closest to the chuck 12 and the chuck 12 is x1, and the spacing between the support rollers of the other support devices 13-2 through 13-n is successively x2, x3,... xn, and if the overall length of the tubular good LP is y, then the relationship between xk (k = 1, 2, 3, etc.) and y is preferably set such that 100(xk/y) is at least 4% and at most 20%. If the spacing xk is too small, interference develops between the chuck 12 and the support rollers and among the support rollers themselves, while if the spacing xk is too large, vibration develops. In practice, as an example, xk can be made short along the portion of the tubular good LP closest to the chuck 12 and increased as the distance from the chuck 12 increases.

As shown in Figure 2, the support devices 13-1 through 13-4 each have four support rollers 13a - 13d arranged in pairs installed on both sides of the tubular good LP, each pair comprising an upper and lower roller. There is no particular restriction on the roller outer diameter d and the roller spacing L of the support rollers 13a, 13b and 13c, 13d forming the pairs each having an upper and lower roller. However, as shown in Figure 3, the roller outer diameter d and the roller spacing L are previously set so that the tubular good can be supported with certainty from both sides by the four support rollers 13a - 13d even when the tubular good LP which is undergoing thread cutting by the thread cutting machine has a maximum diameter (see Figure 3(a)) or a minimum diameter (see Figure 3(b)).

The ratio (d/L) of the roller outer diameter d to the roller spacing L is preferably at least 0.5 and at most 0.98. If the ratio (d/L) is less than 0.5, force is not transmitted to the tubular good LP and support becomes inadequate. Since the support rollers in each pair are installed in the same plane, the ratio (d/L) is naturally less than 1, but taking clearance into consideration, it is made at most 0.98. Examples of the roller outer diameter d and the roller spacing L of the support rollers are shown in the following Table 1.

**Table 1**

| Member being machined | Roller outer diameter d (mm) | Roller spacing L (mm) | d/L |
|---|---|---|---|
| Small-diameter tubular good (φ: up to 177.8) | 105 | 115 | 0.91 |
| Medium-diameter tubular good (φ: 177.8 - 273.1) | 120 | 190 | 0.63 |

The pairs of support rollers 13a, 13b and 13c, 13d each comprising an upper and lower roller are held by air cylinders 13e and 13f to which a prescribed pressure is applied and which can move in and out by just a prescribed distance (a support stroke) so that each pair can be individually moved into and out of contact with the tubular good LP.

In the case of Table 1, the force applied to the support rollers (the holding force) was a total of at least 1500 N and at most 14000 N for the left and right pairs together, and preferably it was at least 4000 N and at most 6000 N. If this holding force is too weak, the tubular good LP is inadequately restrained, while if it is too high, it creates resistance to rotation of the tubular good LP and reduces the cutting speed. As the diameter of the tubular good LP increases, a larger holding force of course becomes necessary.

The thread cutting machine has a usual structure, so it is not shown in the drawings. In order to carry out prescribed thread machining on one end portion of a tubular good LP held by the chuck 12, it of course has a cutting tool which is installed so that its position relative to the tubular good LP can be adjusted.

With an end portion machining apparatus 11 according to the present invention which is constituted in this manner, each group of support rollers 13a, 13b and 13c, 13d are not moved into and out of contact by hydraulic pressure or screws but are moved into and out of contact by air cylinders 13e and 13f. Therefore, even when a fast machining speed is employed to increase productivity, the group of support rollers 13a, 13b and 13c, 13d can follow bending or ellipticality or flatness of a tubular good LP with good responsiveness. Accordingly, vibrations caused by bending or ellipticality or flatness of the tubular good LP are effectively prevented from being transmitted to the portion which is undergoing machining.

The four support rollers 13a - 13d which form two pairs each comprising an upper and lower roller are installed with rollers which have the same outer diameter d installed in the same plane perpendicular to the axial direction of the tubular good LP. As a result, even when the outer diameter of a tubular good LP undergoing thread cutting changes, the support force for the tubular good LP remains the same for support rollers 13a, 13b and 13c, 13d forming pairs each comprising an upper and lower roller without adjustment of the positional relationship among the support rollers 13a, 13b and 13c, 13d forming the pairs each comprising an upper and lower roller, an the tubular good LP can be more stably supported.

There are no particular restrictions on the material forming the support rollers 13a - 13d, but it is preferable to form them from an elastic material such as rubber so as not to scratch the tubular good LP. In this case, an example of an elastic material is natural rubber or synthetic rubber. The material can be varied as suitable, but the hardness HS is at least 60 and at most 100 and preferably at least 80 and at most 90. If the material has HS of less than 60, the support rollers may distort so that support of the tubular good LP by the rollers becomes insufficient, while if it has HS exceeding 100, vibrations of the tubular good LP cannot be absorbed and there is the possibility of vibrations being promoted.

Thus, thread machining of an end portion can be performed with this embodiment to manufacture a tubular good LP while achieving both productivity and machining accuracy to a high level.
An embodiment of the invention has been explained, but the present invention is not limited to this embodiment as an example, and variations and modifications can of course be made within the technical concept shown by the claims.

### Industrial Applicability

The above invention is not limited to an apparatus for carrying out thread cutting of an end portion of a tubular good, and it can be applied to any one of machining apparatus for machining an end portion of an elongated member.

## Claims

1. An end portion machining apparatus comprising a rotatable chuck for holding the vicinity of one end portion of a member being machined, a machining tool which is installed in the vicinity of the chuck for carrying out prescribed machining on one end portion of the member being machined which rotates together with the chuck and which can be controlled in its position with respect to said one end portion of the member being machined, and a support device for supporting the other end portion of the rotating member being machined while following the member being machined, **characterized in that** the support device has four support rollers forming pairs installed on both sides of the member being machined, each pair comprising an upper and lower roller, and an air cylinder which can individually move each pair of support rollers each comprising an upper and lower roller into and out of contact with the member being machined.

2. An end portion machining apparatus as set forth in claim 1 **characterized in that** the four support rollers all have the same outer diameter and are installed in the same plane in the axial direction of the member being machined.

3. A method of manufacturing a tubular good **characterized by** including a step of machining an end portion of a tubular good utilizing the end portion machining apparatus set forth in claim 1 or claim 2.
